# DEMANDE DE BREVET EUROPEEN

(11) **EP 0 534 881 A1**
(43) Date de publication de la demande: **31.03.1993**
(21) Numéro de dépôt: 92460027.3
(22) Date de dépôt: 21.09.1992
(51) Int. Cl.: A01K 80/00

(54) **Dispositif de ramassage de coquillages**

(30) Priorité: 25.09.1991 FR 9112028
(71) Demandeur: INSTITUT FRANCAIS DE RECHERCHE POUR L'EXPLOITATION DE LA MER (IFREMER), 92138 Issy-les-Moulineaux Cedex (FR)
(72) Inventeur: Gourronc, Eugène, F-29230 Porspoder (FR)
(74) Mandataire: Fournier, Michel Robert Marie

(57) **Abrégé**

Le dispositif est plus particulièrement destiné au ramassage des coquillages qui sont enfouis dans le sol marin, tels que les palourdes élevées en parcs.

Il consiste essentiellement en une tête de ramassage apte à être déplacée dans l'eau sur le fond, qui comporte deux rouleaux rotatifs transversaux (6, 7) créant un courant d'eau ascendant, et des moyens de collecte pour recevoir les éléments entraînés par ce courant.

Aux rouleaux rotatifs (6, 7), sont associés des moyens à jets d'eau sous pression (9, 10) pour réaliser un affouillement en profondeur dans la zone d'action des rouleaux, afin d'assurer le désenfouissement des coquillages qui sont alors entraînés par le courant d'eau ascendant.

## Description

La présente invention concerne un dispositif de ramassage de coquillages, plus particulièrement destiné à ceux tels que palourdes ou coques qui ont la particularité d'être enfouis dans le sol marin.

Le développement de l'élevage de coquillages en parcs, notamment de palourdes, a fait naître un besoin en matériels spécialement conçus pour leur ramassage. Ces matériels doivent être aptes à les désenfouir et à les recueillir sans casser les coquilles qui sont relativement fragiles, et en les séparant des sédiments qui constituent leur environnement.

On connaît ainsi un engin de type motoculteur, décrit dans la demande de brevet français n° 2 631 781 au nom de la Société de Mécanique Générale Rabu. Il s'agit d'un chenillard portant une récolteuse sur l'avant, laquelle est constituée d'une brosse cylindrique coopérant avec un soc vibrant pénétrant dans le sol. Un carter entoure la zone ascendante de la brosse de sorte que lorsqu'elle tourne, le mélange de sédiment et de coquillages soulevé par le soc est acheminé autour d'elle sous forme d'un flux ascendant, les coquillages étant recueillis dans un panier récepteur.

De par sa conception, ce dispositif présente l'inconvénient majeur de ne pouvoir fonctionner que dans une profondeur d'eau très faible, soit 0,50 m au plus. Le temps de récolte à chaque marée est dès lors extrêmement réduit, de l'ordre de deux heures environ et, par obligation, la récolte se fait de nuit comme de jour.

Un autre matériel appelé drague cribleuse et divulgué par la demande de brevet n° 85 09430 au nom de la présente demanderesse permet le ramassage des coquillages indépendamment de la profondeur d'eau. Il comporte une lame racleuse déversant dans un crible rotatif où sont lavés et triés les coquillages. A l'arrière, le crible communique avec un poste de collecte duquel les coquillages sont remontés vers la surface par un dispositif de type "air-lift".

La profondeur d'enfouissement des coques ou palourdes variant en fonction de la température et pouvant atteindre 15 cm, la lame racleuse tout comme le soc du dispositif précité doivent pouvoir pénétrer le sol au-delà de cette profondeur. Il s'ensuit un besoin de puissance de déplacement important pour une largeur de travail réduite - 70 cm environ pour la drague cribleuse et moins de 50 cm pour l'engin de type motoculteur. D'autre part, ces matériels laissent derrière eux le sol dans l'état d'un terrain labouré, obligeant pratiquement à un travail de nivelage ultérieur.

On connaît également, par le brevet n° 2 566 816 au nom de Le Béon Roger et Jégo Armel, une drague pour pêcher des coquillages légèrement enfouis ou reposant sur le sol. Elle comporte au moins un cylindre tournant autour d'un axe transversal et créant un courant d'eau ascendant pour acheminer les coquillages depuis le sol jusqu'à une poche de récupération. Bien que ce cylindre réalise un certain affouillement du sol, celui-ci n'est que superficiel et donc très insuffisant dans le cadre du ramassage d'espèces enfouies comme les coques ou palourdes.

Le but de la présente invention est pallier les inconvénients précités des matériels connus pour le ramassage de coquillages enfouis.

A cet effet, elle consiste en un nouveau dispositif consistant essentiellement en une tête de ramassage qui comprend sur un châssis apte à être déplacé dans l'eau sur le fond, au moins un rouleau transversal rotatif à l'avant pour créer derrière lui un courant d'eau ascendant, et des moyens de collecte pour recevoir les éléments entraînés par ledit courant ascendant;
ce dispositif étant caractérisé en ce que la tête de ramassage comprend en outre des moyens à jets d'eau sous pression associés audit rouleau rotatif pour réaliser un affouillement en profondeur dans la zone d'action de celui-ci, afin d'assurer le désenfouissement des coquillages qui sont alors pris dans ledit courant d'eau ascendant.

De préférence, un deuxième rouleau rotatif est prévu à l'arrière du premier, légèrement écarté et tournant en sens inverse. Il permet de mieux maîtriser le courant ascendant.

Dans un mode de réalisation simple, lesdits moyens à jets d'eau sous pression sont arrangés sous la forme d'une rampe transversale à l'avant de la partie inférieure du premier rouleau, dont les jets sont orientés vers le bas et vers l'arrière. Avantageusement, cette rampe est complétée par une seconde rampe à distance derrière elle, qui présente des jets orientés vers le bas et vers l'avant. Une troisième rampe peut être prévue au-dessus des rouleaux, pour acheminer les coquillages mis en suspension par ledit courant ascendant jusqu'au poste de collecte.

Pour être utilisable dans des hauteurs d'eau susceptibles de varier sensiblement, la tête de ramassage est reliée à un engin flottant tel que chaland. Des moyens sont alors prévus pour assurer la remontée des coquillages à partir dudit poste de collecte à l'intérieur de la tête. Il s'agit par exemple d'un transporteur à vis sans fin ou à godets, ou d'un tapis roulant.

Les rouleaux sont de préférence entraînés en rotation par des moteurs hydrauliques, la centrale hydraulique et la pompe alimentant les moyens à jets d'eau se trouvant sur l'engin flottant.

La tête de ramassage peut être poussée ou tractée. Elle peut également être équipée de chenilles, pour devenir motrice.

Les caractéristiques de l'invention mentionnées ci-dessus, ainsi que d'autres, apparaîtront plus clairement à la lecture de la description suivante d'exemples de réalisation, faite en relation avec les dessins annexés dans lesquels :
la Fig. 1 est une vue schématique en coupe le long d'un côté d'une tête de ramassage, illustrant le principe de son fonctionnement,
la Fig. 2 est une vue en perspective de la tête de la Fig. 1, où sont manquants de nombreux éléments pour montrer plus particulièrement la façon dont sont arrangés les moyens à jets d'eau sous pression,
la Fig. 3 est une vue schématique en perspective d'un ensemble selon l'invention comprenant une tête de ramassage reliée à un chaland,
la Fig. 4 est une vue schématique de côté d'un second ensemble chaland-tête de ramassage, et
la Fig. 5 est une vue similaire à la Fig. 4 d'un troisième ensemble.

Dans les dessins, les mêmes éléments sont désignés partout par les mêmes références.

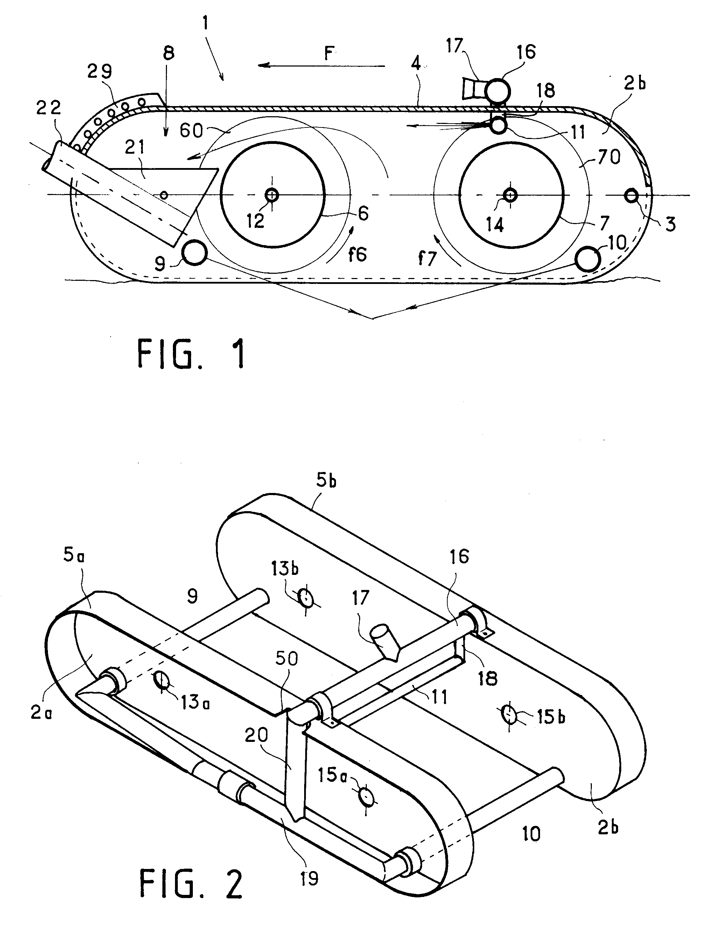

La tête de ramassage 1 des Figs. 1 et 2 comprend un châssis formé de deux flasques latéraux allongés 2a, 2b, réunis par des barres transversales telles que 3, et par un capot supérieur apparaissant en coupe à la Fig. 1. Les deux flasques 2a, 2b sont verticaux et parallèles, et ont leurs extrémité avant et arrière arrondies. A leur périphérie, des bandes 5a, 5b forment des patins de glissement ou skis.

Entre les flasques 2a, 2b, sont montés un rouleau avant 6, un rouleau arrière 7, des moyens de collecte des coquillages 8 devant le rouleau 6, et des moyens à jets d'eau sous pression comprenant une rampe avant 9, une rampe arrière 10 et une rampe supérieure 11.

Le rouleau avant 6 est disposé à une certaine hauteur du sol ou de la base des flasques 2a, 2b, Fig. 1. En pratique, cette hauteur peut être de l'ordre de 10 cm. Le rouleau 6 est monté solidaire d'un axe 12 engagé dans des paliers montés en 13 dans les flasques 2a, 2b, lequel axe 12 est relié à un moyen d'entraînement non montré, avantageusement un moteur hydraulique fixé sur la paroi externe du flasque 2b.

Le rouleau arrière 7 est identique au rouleau 6, et se trouve à une certaine distance au même niveau derrière lui. Il est solidaire d'un axe 14 engagé dans des paliers montés en 15 dans les flasques 2a, 2b, et est entraîné en rotation par des moyens identiques à ceux du rouleau 6. Les deux rouleaux 6 et 7 sont par exemple en polyéthylène.

Le rouleau 6 a pour fonction de créer derrière lui, par rotation sur lui-même dans le sens de la flèche f6 (F indiquant le déplacement de la tête 1 lors du fonctionnement) un courant d'eau dirigé vers le haut. Le rouleau arrière 7, en tournant en sens inverse, selon f7, contribue également à la création de ce courant, mais il permet surtout de mieux le canaliser. L'importance de ce courant ascendant est lié à la vitesse de rotation, au diamètre des rouleaux, et éventuellement à la présence d'appendices sur leur paroi externe. Bien entendu, une certaine adéquation entre différentes dimensions doit être recherchée, que l'on illustrera à titre indicatif par un exemple, mais seulement après description des moyens à jets d'eau sous pression, puisqu'ils sont évidemment concernés en priorité.

Les rouleaux 6 et 7 sont par ailleurs avantageusement pourvus de joues latérales 60, 70 qui augmentent l'uniformité transversale du courant ascendant produit. Pour en augmenter la puissance, on peut ménager sur la paroi externe des rouleaux 6, 7 des appendices comme mentionné précédemment, par exemple sous la forme de nervures en saillie régulièrement écartées, orientées transversalement selon des génératrices ou disposées en hélice.

Les rampes de jets d'eau sous pression 9, 10, 11 sont essentiellement des conduites transversales montées entre les flasques 2a, 2b. Comme le montre plus spécialement la Fig. 2, elles sont desservies à partir d'une conduite d'arrivée d'eau 16 fixée transversalement au-dessus du capot 4, et présentant dans sa partie médiane une bouche raccordable 17. La rampe supérieure 11 communique avec la conduite 16 à ses deux extrémités, par l'intermédiaire de conduites de liaison 18 traversant le capot 4. Quant aux rampes inférieures 9 et 10, elles sont reliées par une de leurs extrémités à une conduite horizontale 19 courant extérieurement le long du flasque 2a, juste au-dessus de la partie inférieure de la bande 5a. La conduite 19 est elle-même reliée à la conduite d'arrivée d'eau 16 par une conduite verticale 20passant dans une échancrure 50 de la partie supérieure de la bande 5a. D'autre part, si la largeur de la tête 1 le nécessite, le symétrique des canalisations 19 et 20 peut être prévu, pour une arrivée d'eau dans les rampes 9 et 10 par leur deux extrémités.

La rampe avant 9 est placée légèrement en avant du rouleau 6, à quelques centimètres au-dessus de la base des flasques 2a et 2b. Elle a pour fonction de réaliser un affouillement en profondeur du sol dans la région comprise entre les rouleaux 6 et 7, afin de désenfouir les coquillages qui sont alors pris dans le courant ascendant créé par ces rouleaux. Les jets d'eau sont donc orientés vers l'arrière, et dans une forme de réalisation satisfaisante, ils font un angle de 20°, environ, avec l'horizontale. Bien entendu, cette valeur n'est donnée qu'à titre d'exemple et est susceptible de variations sensibles. On peut notamment prévoir d'alterner dans la rampe des jets d'inclinaisons nettement différentes. D'autre part, pour obtenir une pénétration efficace, les jets doivent diverger le moins possible, d'où l'intérêt de monter des injecteurs à intervalles réguliers (par exemple de 3 à 4 cm) le long de la rampe 9.

La rampe arrière 10 est sensiblement au même niveau que la rampe avant 9, à l'arrière du rouleau 7. Son rôle est de contribuer à la mise en suspension des coquillages par la rampe avant 9 dans la zone d'action des rouleaux 6 et 7. Ses jets sont orientés vers l'avant, c'est-à-dire à l'opposé de ceux de la rampe 9. Ils forment donc un barrage d'eau limitant vers l'arrière les mouvements des coquillages et sédiments occasionnés par les jets de la rampe avant 9, et augmentent l'effet tourbillonnaire qui se traduit par une fluidisation ou séparation au sein de ces mêmes éléments. De manière à réaliser un véritable rideau d'eau, la rampe arrière 10 est de préférence équipée d'injecteurs produisant des jets plats, connus sous l'appellation d'injecteurs-pinceaux. Dans la forme de réalisation précédemment mentionnée à propos de l'inclinaison des jets de la rampe avant est de 20°, celle des jets de la rampe arrière 10 est de 15°, environ.

La rampe supérieure 11, au-dessus du rouleau arrière 7, apporte une composante de courant horizontale dirigée vers l'avant, afin d'infléchir et de prolonger dans cette direction le flux d'entraînement des coquillages créé par les rouleaux 6 et 7. En pratique, elle n'est indispensable que lorsque les moyens de collecte des coquillages dans la tête 1 sont à l'avant. Dans le cas contraire, sous l'effet du déplacement en avant de la tête, le flux engendré par les rouleaux 6 et 7 s'infléchit de lui-même vers l'arrière.

Les jets supérieurs gagnent en efficacité à être divergents. Par conséquent, il est superflu de prévoir des injecteurs sur la conduite 11 où un alignement de simples perçages suffit.

Tels que représentés à la Fig. 1, les moyens de collecte 8 comprennent une trémie 21 articulée de chaque côté aux flasques 2a et 2b et constituant la base d'un transporteur à vis sans fin, le fond de la trémie se prolongeant vers l'extérieur en un conduit cylindrique 22. Les parois de la trémie 21 sont des éléments de grille pour permettre l'évacuation des sédiments. A noter que les coquillages sortent propres du conduit 21, du fait d'avoir été brassés dans l'eau lors du transport.

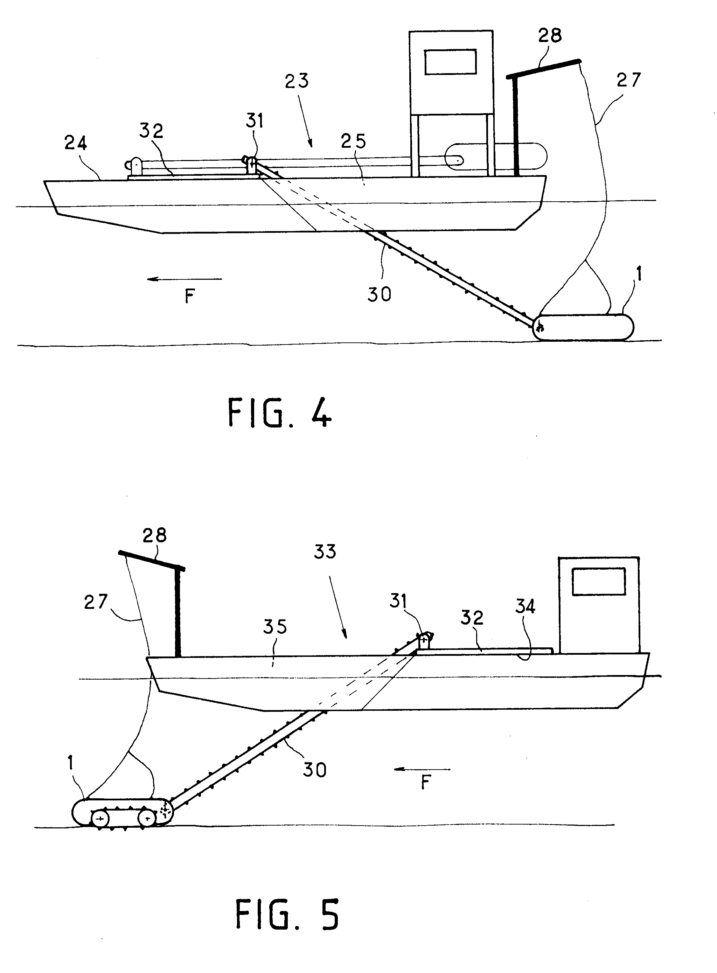

En variante, les coquillages peuvent être récupérés au moyen d'un tapis roulant ou d'un transporteur à godets, articulés dans la tête 1 comme le montre les Figs. 4 et 5.

Pour revenir sur l'adéquation mentionnée plus haut à rechercher entre diverses dimensions et positionnements, un prototype ayant donné satisfaction lors d'essais présentait les caractéristiques suivantes :
- longueur et hauteur des flasques respectivement de 1,50 m et 0,40 m;
- rouleaux avant et arrière axés à mi-hauteur des flasques, ayant un diamètre de 25 cm, un diamètre de joues latérales de 37 cm, et un écartement entre leurs axes de 58 cm;
- axe du rouleau avant à 50 cm de l'extrémité avant des flasques;
- axes des rampes avant et arrière respectivement à 7 cm et 5,5 cm de la base, et respectivement à 18,5 cm devant l'axe du rouleau avant et 18,5 cm derrière l'axe du rouleau arrière.

La largeur de la tête 1 peut varier dans des limites raisonnables, soit d'environ 1 m à un peu plus de 2 m, offrant une largeur de travail nettement accrue par rapport aux matériels existants.

Pour le ramassage de coquillages, la tête 1 est immergée et déplacée en avant à vitesse très lente, généralement inférieure à 0,5 noeud, la bouche d'arrivée d'eau 17 étant reliée à une pompe, et les rouleaux 6, 7 mis en rotation, par exemple entre 300 et 500 tours/minute. Pour une pression d'eau de 6 bars environ, les jets sortant des injecteurs de la rampe avant 9 ont une pénétration atteignant 20 cm de profondeur, de sorte que la quasi-totalité des coquillages présents sont désenfouis et recueillis. Après passage de la machine, l'aspect du fond reste inchangé, seules les traces des patins étant légèrement apparentes. Le sol est juste ameubli, soit dans des conditions propices pour un nouvel ensemencement.

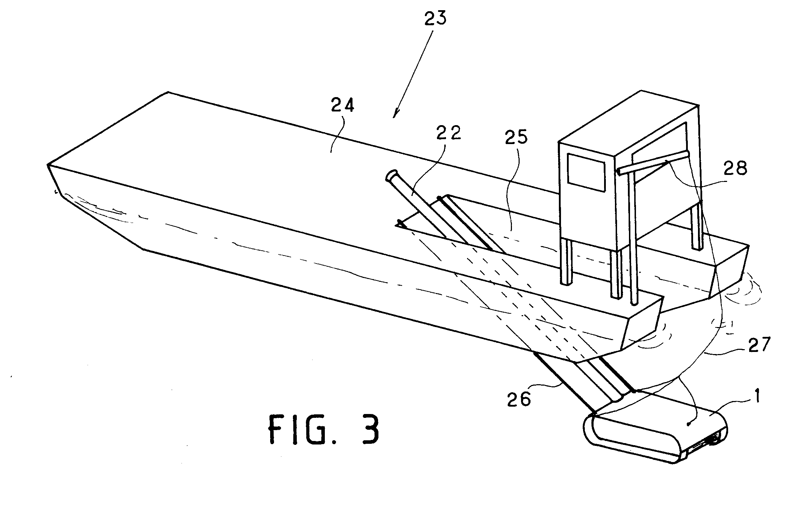

La Figs. 3 montre la tête 1 reliée à un chaland 23 sur lequel sont embarqués la centrale hydraulique desservant les moteurs des rouleaux et la pompe pour les rampes 9 à 11. A partir d'une certaine distance de l'avant, le pont 24 se divise en deux parties autour d'un long puits central 25 ouvert à l'arrière, à la manière d'un catamaran. La tête 1 est reliée au chaland 23 par des funes 26 passant dans le puits 25. De même, le moyen de remontée des coquillages, soit ici un transporteur à vis sans fin 22, avec les diverses conduites (hydraulique, eau sous pression) passent dans le puits 25. Le transporteur 22 s'appuie sur le haut de sa paroi avant et débouche en avant de lui sur le pont 24. La tête 1 est par ailleurs accrochée à des câbles de levage 27 descendant de la potence pivotante 28. Pour la fixation des funes et des câbles, la tête 1 comporte des moyens d'accrochage latéraux à l'avant, repérés en 29 à la Fig. 1, et un moyen d'accrochage central à l'arrière.

En fin de travail, la tête 1 est remontée et arrimée dans la partie arrière du puits 25, l'avant du transporteur 22 reposant sur le pont 24.

A la Fig. 4, la tête 1 est associée à un même chaland 23 que celui de la Fig. 3, mais ici le moyen de remontée des coquillages est un tapis roulant 30, dont l'extrémité supérieure est articulée sur un support 31 monté sur le pont 24 à l'avant du puits 25.

Selon l'invention, le support 31 a une aptitude de coulissement longitudinal dans une glissière 32 sur le pont. Par cet arrangement, on augmente la longueur du tapis roulant tout en conservant la possibilité de rentrer la tête 1 sur le bateau en position relevée, comme illustré en traits fins.

Ce système est également présent dans l'ensemble de la Fig. 5, où le chaland 33 a son puits 35 ouvert non plus à l'arrière mais à l'avant du pont 34, la tête 1 se trouvant par conséquent à l'avant du chaland. Par l'intermédiaire du châssis du tapis roulant 30 ou de bras latéraux, la tête 1 est poussée par le chaland 33 pour le travail. En variante, elle est montée sur roues ou sur chenilles, comme montré sur le dessin, pour devenir automotrice. C'est elle qui tracte alors le chaland 33, cette façon de procéder présentant l'avantage de supprimer les problèmes de dérive.

Basé sur le même principe, pour une utilisation dans des hauteurs d'eau peu importantes, un engin de ramassage autonome est envisageable, qui consisterait en une tête automotrice telle que celle de la Fig. 5, surmontée d'une plateforme surélevée pour le poste de pilotage et la motorisation.

## Revendications

**1)** Dispositif de ramassage de coquillages, plus particulièrement destiné aux coquillages qui sont enfouis dans le sol marin, consistant essentiellement en une tête de ramassage (1) qui comprend sur un châssis apte à être déplacé dans l'eau sur le fond, au moins un rouleau transversal rotatif (6) à l'avant pour créer derrière lui un courant d'eau ascendant, et des moyens de collecte pour recevoir les éléments entraînés par ledit courant ascendant;
caractérisé en ce que la tête de ramassage (1) comprend en outre des moyens à jets d'eau sous pression associés au rouleau rotatif (6) pour réaliser un affouillement en profondeur dans la zone d'action de celui-ci, afin d'assurer le désenfouissement des coquillages qui sont alors pris dans ledit courant d'eau ascendant.

**2)** Dispositif selon la revendication 1, caractérisé en ce que lesdits moyens à jets d'eau sous pression comprennent une rampe transversale (9) à l'avant de la partie inférieure du rouleau (6), dont les jets sont orientés vers le bas et vers l'arrière.

**3)** Dispositif selon la revendication 2, caractérisé en ce que les dits moyens à jets d'eau sous pression comprennent en outre une rampe transversale (10) à distance derrière la rampe avant (9), dont les jets sont orientés vers le bas et vers l'avant.

**4)** Dispositif selon la revendication 2 ou 3, caractérisé en ce que la rampe avant (9) est pourvue d'injecteurs procurant des jets divergeant le moins possible.

**5)** Dispositif selon la revendication 3 ou 4, caractérisé en ce que la rampe arrière (10) est pourvue d'injecteurs-pinceaux.

**6)** Dispositif selon l'une des revendications 2 à 5, caractérisé en ce que les jets de la rampe avant (9) sont inclinés de 20°, environ, par rapport à l'horizontale, tandis que l'inclinaison des jets de la rampe arrière (10) est de 15°, environ.

**7)** Dispositif selon l'une des revendications 2 à 6, caractérisé en ce que les moyens à jets d'eau sous pression comprennent en outre une rampe transversale supérieure (11), dont les jets ont pour fonction d'infléchir et de prolonger le courant ascendant créé par le rouleau rotatif (6) vers lesdits moyens de collecte.

**8)** Dispositif selon l'une des revendications 1 à 7, caractérisé en ce que lesdits moyens de collecte comprennent un moyen de remontée des coquillages vers la surface.

**9)** Dispositif selon la revendication 8, caractérisé en ce que ce moyen de remontée est un transporteur à vis sans fin (21, 22).

**10)** Dispositif selon la revendication 8, caractérisé en ce que ce moyen de remontée est un tapis roulant (30).

**11)** Dispositif selon l'une des revendications 1 à 10, caractérisé en ce que la tête (1) comprend un second rouleau rotatif (7) à l'arrière du rouleau (6).

**12)** Dispositif selon l'une des revendications 1 à 9, caractérisé en ce que la tête (1) est automotrice.

**13)** Dispositif selon l'une des revendications 1 à 12, caractérisé en ce que la tête (1) est reliée à un chaland (23, 33) comportant un puits longitudinal (25, 35), dans lequel passe ledit moyen de remontée (22 ou 30) pour amener les coquillages sur le pont (24, 34).

**14)** Dispositif selon la revendication 13, caractérisé en ce que ledit moyen de remontée de coquillage (30) est articulé sur un support (31) disposé sur le pont (34) au bord du puits (25, 35), lequel support (31) est monté apte à coulisser dans une glissière longitudinale (32).
